# EUROPEAN PATENT APPLICATION

(11) **EP 3 737 075 A1**
(43) Date of publication of application: **11.11.2020**
(21) Application number: 20746085.8
(22) Date of filing: 06.02.2020
(51) Int. Cl.: H04M 1/02, H04W 88/02

(54) **MOBILE TERMINAL**

(30) Priority: 23.02.2019 CN 201910134725
(71) Applicant: HUAWEI TECHNOLOGIES CO., LTD., Guangdong 518129 (CN)
(72) Inventor: MA, Chunjun, Shenzhen Guangdong 518129 (CN); LIU, Yu, Shenzhen Guangdong 518129 (CN); XIE, Jian, Shenzhen Guangdong 518129 (CN); LI, Zheng, Shenzhen Guangdong 518129 (CN); BAO, Zhangmin, Shenzhen Guangdong 518129 (CN); FANG, Chun Yuan, Shenzhen Guangdong 518129 (CN)
(74) Representative: Epping - Hermann - Fischer
(86) International application number: PCT/CN2020/074408
(87) International publication number: WO 2020/168921

(57) **Abstract**

This application provides a mobile terminal. The mobile terminal includes two housings that are rotatably connected, and further includes a flexible screen component covering the two housings, and edges of the flexible screen component are separately bonded to the two housings. When the mobile terminal is folded, the flexible screen component is bent with rotation of the two housings. However, because the flexible screen component is a multi-layer structure, the flexible screen component arches. Therefore, the flexible screen component is separately connected to two groups of position-limiting components, and the two groups of position-limiting components are slidingly connected to two housings, and are configured to limit a relative vertical distance between the flexible screen component and the two housings. One end of the position-limiting component is fastened to the flexible screen component, and the other end is slidingly connected to the housing, so that the vertical distance between the housing and the flexible screen component is limited by using the position-limiting component. Therefore, when the flexible screen component is bent, the arching of the flexible screen component may be reduced by using the position-limiting component, to improve use of the mobile terminal.

## Description

This application claims priority to Chinese Patent Application No. 201910134725.2, filed with the China National Intellectual Property Administration on February 23, 2019 and entitled "MOBILE TERMINAL", which is incorporated herein by reference in its entirety.

### TECHNICAL FIELD

This application relates to the field of terminal technologies, and in particular, to a mobile terminal.

### BACKGROUND

At present, appearances of mobile phones are monotonous, and functions of mobile phones are homogenized, which causes aesthetic fatigue for consumers. Due to development of a flexible display screen technology, a display screen of a mobile phone may also be bent. To implement bending of the mobile phone, important factors include that the mobile phone supports a flexible screen that allows the mobile phone to be folded and unfolded, reliable bonding between a screen and a support sheet is implemented, and the screen in a bending area is flat and no detaching occurs in a bending process. However, because the flexible display screen is disposed in a multi-layer structure, when the mobile terminal is folded, the flexible screen tends to arch. This affects use of the mobile phone.

### SUMMARY

This application provides a mobile terminal, to improve use of the mobile terminal.

According to a first aspect, a mobile terminal is provided, and the mobile terminal is a foldable mobile terminal. During specific disposition, the mobile terminal includes two housings: a first housing and a second housing, and the first housing and the second housing are rotatably connected. In addition, the mobile terminal further includes a flexible screen component, and the flexible screen component is fastened to the first housing and the second housing. During specific fastening, edges of the flexible screen component are separately bonded to the two housings. When the mobile terminal is folded, the flexible screen component is bent with rotation of the first housing and the second housing. When the flexible screen component is bent, the screen component may arch. Therefore, the flexible screen component provided in this embodiment of this application is separately connected to two groups of position-limiting components. Correspondingly, a group of sliding slots are disposed on each housing, and a length direction of a sliding slot in each group of sliding slots is perpendicular to an axis direction along which the two housings are rotatably connected. During cooperation, the two groups of position-limiting components are respectively located in the two groups of sliding slots. A quantity of position-limiting components in each group of position-limiting components is in a one-to-one correspondence with a quantity of sliding slots in each group of sliding slots, and the position-limiting component may slide in a sliding slot in which the position-limiting component is located. In addition, the two groups of position-limiting components are configured to limit a relative vertical distance between the flexible screen component and the two housings. Therefore, a vertical distance between the housing and the flexible screen component is limited by using a length size of the position-limiting component (a size in a plane direction perpendicular to a direction in which the housing faces the flexible screen component). Therefore, when the flexible screen component is bent, the arching of the flexible screen component can be reduced by using the flexible screen component, to improve use of the mobile terminal.

When the flexible screen component arches, an entire flexible screen component arches. However, a position near a bending position arches seriously, in other words, a position at which the first housing and the second housing rotate. Therefore, when the two groups of position-limiting components are disposed, the two groups of position-limiting components are disposed close to an end, of a corresponding housing, close to an axis along which the housing is rotatably connected. This reduces the arching more effectively, and improves use of the mobile terminal.

When each group of position-limiting components is specifically disposed, a quantity of position-limiting components in each group of position-limiting components may be one, two, or more. When two or more position-limiting components are used, the position-limiting components may be arranged in a single row arrangement manner, and an arrangement direction is parallel to an axis along which the two housings are rotatably connected. This reduces the arching more effectively, and improves use of the mobile terminal.

When the flexible screen component is connected to each group of position-limiting components, to enable the position-limiting components to reduce the arching of the flexible screen component in a maximum range, rigidity of the flexible screen component is enhanced. In this case, a structural layer is disposed on a surface, of the flexible screen component, facing the two housings. There are two structural layers, and the two structural layers may be respectively used to fasten two groups of position-limiting components. During specific fastening, the two groups of position-limiting components are fastened on a surface, of the two structural layers, away from the flexible screen component in a one-to-one correspondence. In addition, when the two structural layers are disposed, the two structural layers bypass a bending area of the flexible screen, to avoid impact of an added structural layer on bending of the mobile terminal.

When each structural layer is specifically disposed, each structural layer may be in a different shape such as a rectangle, an ellipse, or a circle. In a specific implementation solution, the structural layer is a rectangle, and a length direction of the structural layer is parallel to an axis direction along which the housings are rotatably connected.

The structural layer may be fastened to the position-limiting component in different manners. The following separately describes the manners of the fastening connection.

In a specific implementation solution, that the flexible screen component is fastened to two groups of position-limiting components includes: a protrusion is disposed on a surface, of at least one of the two structural layers, away from the flexible screen component, and each group of position-limiting components is in a threaded connection with a corresponding protrusion. In this case, a threaded hole is disposed on the protrusion, an external thread is disposed on the position-limiting component, and the position-limiting component is fastened to the structural layer by using the thread.

In another specific implementation solution, that the flexible screen component is fastened to two groups of position-limiting components includes: a threaded sleeve is fastened to a surface, of at least one of the two structural layers, away from the flexible screen component, and each group of position-limiting components is in a threaded connection with a threaded sleeve.

When the threaded sleeve is fastened to the structural layer, the threaded sleeve is welded to or bonded to the corresponding structural layer. In other words, relative fastening between the threaded sleeve and the structural layer may be implemented in different connection manners.

In another specific implementation solution, a protrusion may be disposed at one structural layer, and a threaded sleeve may be disposed at the other structural layer, to fasten the two groups of position-limiting components.

In another specific implementation solution, cooperation between the structural layer and the position-limiting component may be further implemented through clamping. For example, a clamping slot is disposed at the structural layer, and correspondingly, a clamping buckle is disposed on the position-limiting component. The position-limiting component is fastened to the structural layer through cooperation between the clamping slot and the clamping buckle.

Sliding cooperation between the position-limiting component and the sliding slot may be specifically implemented in different manners. For example, in a specific implementation solution, each group of position-limiting components includes at least one position-limiting component, and each position-limiting component is a T-shaped position-limiting component. A vertical part of each position-limiting component is in a corresponding sliding slot and can slide relative to the sliding slot. A horizontal part of each position-limiting component is clamped on a surface, of the sliding slot, away from the flexible screen component, to limit a movement of the vertical part toward the flexible screen component.

In another implementation solution, the sliding slot in each group of sliding slots is an inverted T-shaped sliding slot. Each group of position-limiting components includes at least one position-limiting component, and each position-limiting component is an inverted T-shaped position-limiting component. The horizontal part of each position-limiting component is in a horizontal part of a corresponding sliding slot and can slide, and the vertical part of each position-limiting component is in a vertical part of the corresponding sliding slot and can slide. A cooperation effect between the T-shaped slot and the T-shaped position-limiting component can be effectively improved through cooperation between the disposed T-shaped slot and the T-shaped position-limiting component.

In another implementation solution, two opposite side walls of the sliding slots in each group of sliding slots are provided with a position-limiting slot. Each group of position-limiting components includes at least one position-limiting component, and each position-limiting component is an inverted T-shaped position-limiting component. A vertical part of each position-limiting component is in the corresponding sliding slot and can slide, and a horizontal part of the position-limiting component is in a position-limiting slot on the corresponding sliding slot and can slide. The position-limiting component is limited through cooperation between the position-limiting slot and the horizontal part, to ensure that a vertical distance between the housing and the flexible screen can be limited.

In a specific implementation solution, the flexible screen component includes a cover plate and a flexible screen connected to the cover plate, and the cover plate is separately bonded to the two housings, and the flexible screen is fastened to the cover plate. In addition, when there is a structural layer, the structural layer is connected to the flexible screen, and the position-limiting component is connected to the structural layer.

According to a second aspect, a mobile terminal is provided. The mobile terminal includes: two housings that are rotatably connected, a flexible screen component fastened to the two housings, and a position-limiting component fastened to the flexible screen component. The position-limiting component includes a cylindrical mechanical part and a threaded sleeve, the cylindrical mechanical part includes a convex shoulder, and the threaded sleeve is fastened to the flexible screen component. A sliding slot is disposed on the housing, and the cylindrical mechanical part passes through the sliding slot and is sleeved on the threaded sleeve. The cylindrical mechanical part is fastened to the threaded sleeve, and the cylindrical mechanical part slides in the sliding slot. Therefore, a vertical distance between the housing and the flexible screen component is limited by using a length size of the position-limiting component (a size in a plane direction perpendicular to a direction in which the housing faces the flexible screen component). Therefore, when the flexible screen component is bent, the arching of the flexible screen component can be reduced by using the flexible screen component, to improve use of the mobile terminal.

### BRIEF DESCRIPTION OF DRAWINGS

FIG. 1 is a schematic diagram of an unfolded mobile terminal according to an embodiment of this application;
FIG. 2 is a schematic diagram of a rear side of a mobile terminal according to an embodiment of this application;
FIG. 3 is a schematic diagram of a layer structure of a mobile terminal according to an embodiment of this application;
FIG. 4 is a schematic diagram of cooperation among a position-limiting component, a housing, and a flexible screen component that are of a mobile terminal according to an embodiment of this application;
FIG. 5 is a schematic diagram of cooperation among a position-limiting component, a housing, and a flexible screen component that are of a mobile terminal according to an embodiment of this application;
FIG. 6 is another schematic diagram of cooperation among a position-limiting component, a housing, and a flexible screen component that are of a mobile terminal according to an embodiment of this application;
FIG. 7 is a schematic diagram of a position of a position-limiting component when a mobile terminal is unfolded according to an embodiment of this application;
FIG. 8 is a schematic diagram of a position of a position-limiting component when a mobile terminal is folded according to an embodiment of this application;
FIG. 9 is a schematic diagram of cooperation between a position-limiting component and a housing according to an embodiment of this application;
FIG. 10 is another schematic diagram of cooperation between a position-limiting component and a housing according to an embodiment of this application;
FIG. 11 is another schematic exploded diagram of cooperation between a position-limiting component and a housing according to an embodiment of this application;
FIG. 12 is a diagram of a relative position relationship between a position-limiting component and a flexible screen component according to an embodiment of this application;
FIG. 13 is a schematic exploded diagram of a mobile terminal according to an embodiment of this application;
FIG. 14 is a schematic exploded diagram of a position-limiting component according to an embodiment of this application;
FIG. 15 is a schematic diagram of assembly of a position-limiting component according to an embodiment of this application; and
FIG. 16 is a schematic diagram of assembly of a position-limiting component in a sliding direction according to an embodiment of this application.

### DESCRIPTION OF EMBODIMENTS

To make the objectives, technical solutions, and advantages of this application clearer, the following further describes this application in detail with reference to the accompanying drawings.

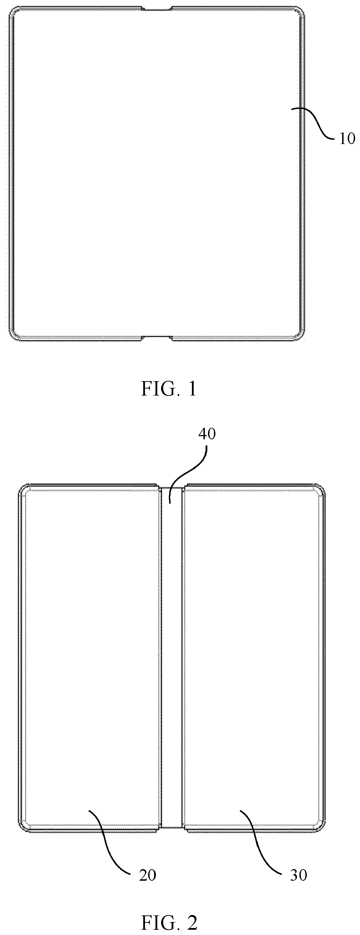

To facilitate understanding of a mobile terminal provided in the embodiments of this application, the following first describes the mobile terminal. The mobile terminal provided in the embodiments of this application is a foldable mobile terminal, for example, a mobile phone or a tablet computer. FIG. 1 shows a front side (a side on which an image is displayed) of the mobile terminal when the mobile terminal is unfolded, and FIG. 2 shows a rear side (a side opposite to the front side) of the mobile terminal when the mobile terminal is unfolded. First, referring to FIG. 2, the mobile terminal provided in this embodiment of this application includes two housings. For ease of description, the two housings are separately named as a first housing 20 and a second housing 30. The housing provided in this embodiment of this application is used as a support structure of a flexible screen component. The housing may specifically include a middle frame and a side frame connected to the middle frame. The middle frame may be fastened to the side frame, or the middle frame and the side frame may be of an integrated structure. For example, the middle frame and the side frame are of an integrally formed structure. Certainly, the housing may further include a rear housing. The rear housing may be fastened to the side frame, or the rear housing and the side frame are of an integrated structure. For example, the rear housing and the side frame are of an integrally formed structure.

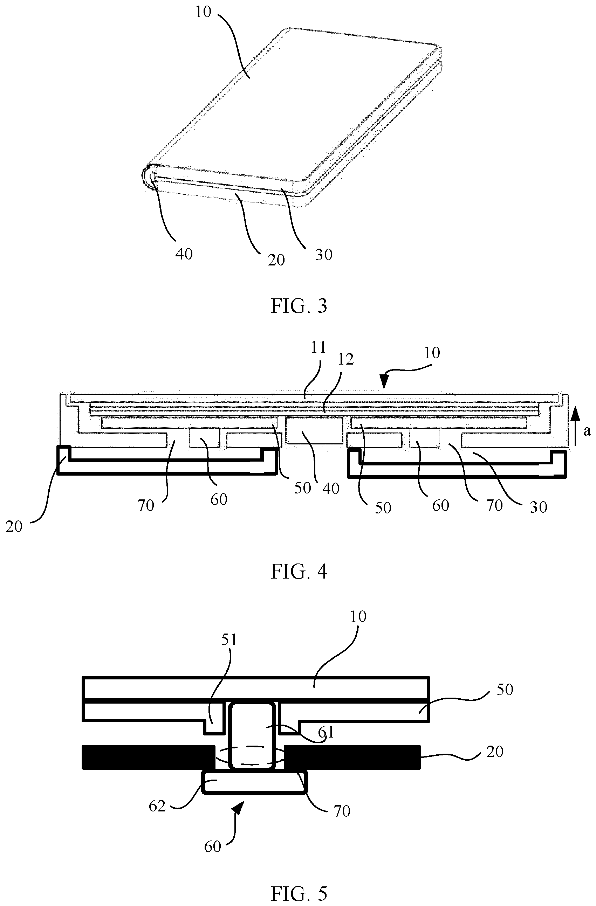

Still referring to FIG. 2, the first housing 20 and the second housing 30 are rotatably connected. For example, the first housing 20 and the second housing 30 are rotatably connected by using a bending structure 40, and the bending structure 40 deforms when the first housing 20 and the second housing 30 rotate, to implement folding of the mobile terminal. As shown in FIG. 3, when the two housings rotate to a folded state, the bending structure 40 deforms, and the first housing 20 and the second housing 30 are stacked. The bending structure 40 may be a bending structure developed based on a design of a folding terminal, or may be another bending structure. This is not limited in this embodiment of the present invention. In addition, when the first housing 20 and the second housing 30 are rotatably connected, a rotating shaft or another component may be used to implement the rotation connection. The rotating shaft may be a new rotating shaft structure developed based on the folding terminal, or may be another rotating shaft structure. This is not limited in this embodiment of the present invention.

Still referring to FIG. 1 and FIG. 3, the mobile terminal provided in this embodiment of this application further includes a flexible screen component 10, and the flexible screen component 10 is fastened to the two housings. An example in which the mobile terminal shown in FIG. 1 and FIG. 2 is unfolded is used. In this case, the first housing 20 and the second housing 30 are disposed side by side on two opposite sides of the bending structure 40, and are separately fastened to the bending structure 40. The flexible screen component 10 covers the first housing 20, the second housing 30, and the bending structure 40. During connection, edges of the flexible screen component 10 are separately fastened to the first housing 20 and the second housing 30. During specific connection, different connection manners may be used, for example, bonding connection. When the mobile terminal is folded, as shown in FIG. 3, when the first housing 20 and the second housing 30 are stacked, the flexible screen component 10 is bent and on an outer surface of the mobile terminal.

The flexible screen component 10 may include different structures. As shown in FIG. 4, a structure of the flexible screen component 10 shown in FIG. 4 includes a cover 11 and a flexible screen 12 connected to the cover 11. The cover plate 11 may be a cover plate 11 made of a transparent substrate, for example, a cover plate 11 made of a material having flexibility and rigidity, such as thin glass and resin. The flexible screen 12 may be a bendable display screen, for example, an organic light-emitting diode display screen, an active matrix organic light-emitting diode display screen, or an active matrix organic light-emitting diode display screen. The flexible screen 12 may include a multi-layer structure, for example, include a most basic cathode layer, an organic light-emitting layer, and an anode layer, and certainly may further include structures such as an electronic transmission layer and a polarizer layer. When the flexible screen component 10 is fastened to the two housings, the cover 11 is separately bonded to the two housings. Specifically, an edge of the cover 11 may be bonded to a side wall of the housing. The edge of the cover plate 11 is a part, of the cover plate 11, lapped over the housing shown in FIG. 4. The flexible screen 12 in the flexible screen component 10 is located between the housing and the cover 11, to protect the flexible screen 12 by using the housing and the cover 11. Still referring to FIG. 3, when the mobile terminal is folded, the flexible screen component 10 is bent, and an entire flexible screen component arches, but the flexible screen 12 in an area near a bending position (near an area near the bending structure 40) arches seriously. This affects use of the mobile terminal. To improve arching of the flexible screen 12, a position-limiting component 60 is further disposed in the mobile terminal provided in this embodiment of this application. The following describes the position-limiting component 60 with reference to the accompanying drawings.

To improve the arching of the flexible screen component 10, the flexible screen component 10 provided in this embodiment of this application is separately connected to two groups of position-limiting components 60. A group of position-limiting components 60 is slidingly connected to the first housing 20, and a group of position-limiting components 60 is slidingly connected to the second housing 30. In addition, during disposing, a connection manner between the two groups of position-limiting components 60 and the flexible screen component 10 may be the same as a connection manner between the two groups of position-limiting components 60 and the housing. Therefore, one group of position-limiting components 60 is used as an example for description.

For any position-limiting component 60 in each group of position-limiting components 60, one end of the position-limiting component 60 is fastened to the flexible screen component 10. When the flexible screen component 10 includes the flexible screen 12, the position-limiting component 60 is fastened to a surface, of the flexible screen 12, away from the cover 11. The other end of the position-limiting component 60 is slidingly connected to the housing, and movement of the position-limiting component 60 in a first direction is limited when the position-limiting component 60 is slidingly connected to the housing. The first direction refers to a direction in which the housing points to the flexible screen component 10, for example, a direction shown by a straight line a in FIG. 4. When the position-limiting component 60 is slidingly connected to the housing and the movement in the first direction is limited, different structural forms may be used for implementation. The following describes a manner of connecting the position-limiting component 60 to the flexible screen component 10 and the housing with reference to specific accompanying drawings.

First, a connection between the position-limiting component 60 and the flexible screen component 10 is described. When the position-limiting component 60 is fastened to the flexible screen component 10, the position-limiting component 60 may be directly fastened to the flexible screen component 10. Certainly, another component may alternatively be configured to improve a manner of connecting the flexible screen component 10 and the position-limiting component 60. For example, in a structure shown in FIG. 4, a structural layer 50 is located on a surface, of the flexible screen component 10, facing the housing. In other words, the structural layer 50 is disposed on the flexible screen 12. The structural layer 50 is used to improve a connection between the flexible screen 12 and the position-limiting component 60. The structural layer 50 has a specific structural strength, for example, is made of a material that has a specific support strength, such as plastic or a metal sheet.

When two groups of position-limiting components 60 are used, there are also two corresponding structural layers 50, and the two structural layers 50 are respectively used to fasten the two groups of position-limiting components 60. For example, in the structure shown in FIG. 4, one structural layer 50 correspondingly fastens one group of position-limiting components 60. When the two structural layers 50 are specifically disposed, the two structural layers 50 bypass a bending area of the flexible screen 12, to avoid impact of an added structural layer 50 on bending of the mobile terminal. For example, the two structural layers 50 are in a one-to-one correspondence with two housings, and the two structural layers 50 bypass the bending structure 40, to ensure that bending of the flexible screen 12 is not affected when the structural layer 50 is disposed. In addition, when the two structural layers 50 are connected to the flexible screen component 10, the two structural layers 50 may be fastened by using a bonding connection or a connection component. For example, when the bonding connection is used, a surface, of the structural layer 50, facing the flexible screen 12 may be fastened to the flexible screen component 10 by using a bonding adhesive. When the connection component is used for connection, the flexible screen component 10 may be fastened by using a bolt or a screw. It should be understood that only a plurality of specific connection manners are enumerated above, and another connection manner may also be applied to this embodiment of this application.

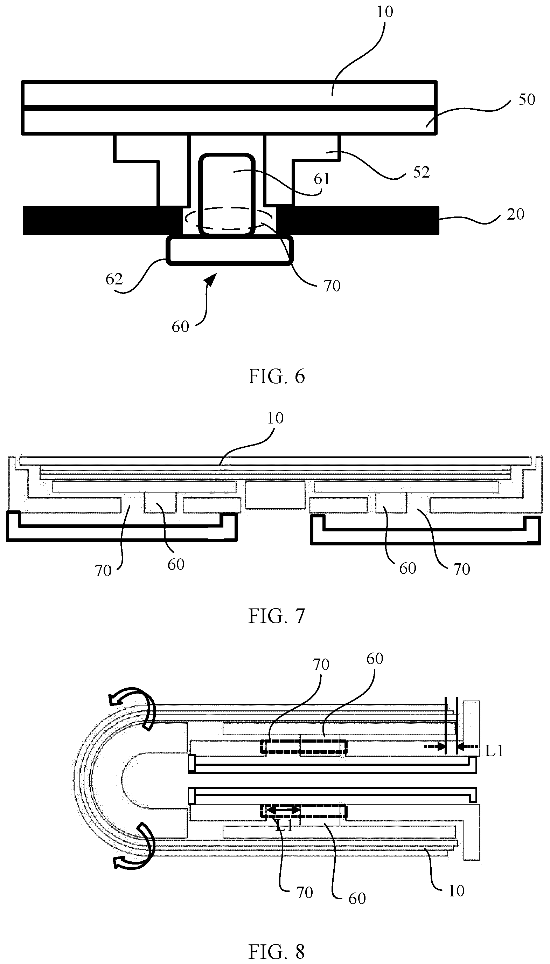

When the position-limiting component 60 is fastened to the structural layer 50, there may be a plurality of fastening manners, for example, different connection manners such as a threaded connection or a clamping connection. When the threaded connection is used, different structural forms may also be used. For example, in a structure shown in FIG. 5, a protrusion 51 is disposed on a surface, of the structural layer 50, away from the flexible screen component 10, and each position-limiting component 60 is in the threaded connection with a corresponding protrusion 51. The structural layer 50 and the protrusion 51 may be of an integrated structure. A quantity of threaded holes disposed on the protrusion 51 is in a one-to-one correspondence with a quantity of corresponding position-limiting components 60, so that the position-limiting components 60 are fastened to the protrusion 51 through threaded connection. It may be understood that a hole may also be opened at the structural layer 50, and a threaded hole is disposed on an inner wall of the hole. In this way, the position-limiting component 60 is fastened to the structural layer 50 by using the threaded hole. When the threaded connection is used, in addition to the structure shown in FIG. 5, another structure may be used. As shown in FIG. 6, when a structure shown in FIG. 6 is used, a threaded sleeve 52 is fastened to a surface, of the structural layer 50, away from the flexible screen component 10. A quantity of threaded sleeves 52 is in a one-to-one correspondence with a quantity of position-limiting components 60 in a corresponding group of position-limiting components 60. The structural layer 50 is fastened to the flexible screen component 10 through threaded connection between the position-limiting component 60 and the threaded sleeve 52. When the threaded sleeve 52 is fastened, the threaded sleeve 52 may be bonded to the structural layer 50 in different connection manners. For example, the threaded sleeve 52 is bonded to the structural layer 50, or the structural layer 50 is fastened in a welding connection manner when the structural layer 50 is a metal layer. In addition, the threaded sleeve 52 may be a cylinder body with an inner thread, or may be a nut, or certainly may be another structure that can implement the threaded connection.

FIG. 5 and FIG. 6 show a plurality of different connection manners between the structural layer 50 and the position-limiting component 60. Although connection manners between the structural layer 50 and the position-limiting component 60 shown in FIG. 5 and FIG. 6 are the same, to be specific, the two structural layers 50 in the mobile terminal are connected to the position-limiting component 60 in a same manner, in the structure provided in this embodiment of this application, the two structural layers 50 in the mobile terminal may be connected to the corresponding position-limiting component 60 in different manners. For example, one structural layer 50 is provided with the protrusion 51 with a threaded hole, and the other structural layer 50 is fastened to the threaded sleeve 52. Therefore, when the structural layer 50 provided in this embodiment of this application is connected to the position-limiting component 60, the protrusion 51 may be disposed on a surface, of at least one of the two structural layers 50, away from the flexible screen component 10, and the position-limiting component 60 is in the threaded connection with the corresponding protrusion 51. Alternatively, at least one of the two structural layers 50 may be fastened to the threaded sleeve 52 on a surface away from the flexible screen component 10, and each group of position-limiting components 60 is in the threaded connection with the corresponding threaded sleeve 52.

In addition to the threaded connection used in the foregoing description, the structural layer 50 may be fastened to the position-limiting component 60 in a clamping connection manner. For example, a clamping slot is disposed at the structural layer 50, and correspondingly a clamping buckle is disposed on the position-limiting component 60. The position-limiting component 60 is fastened to the structural layer 50 through cooperation between the clamping slot and the clamping buckle. A structure in which the clamping slot is disposed at the structural layer 50, and the clamping buckle is disposed on the position-limiting component 60 may be similar to the structure in FIG. 5. To be specific, the protrusion 51 is disposed on a surface, of the structural layer 50, away from the flexible screen component 10, the clamping slot is disposed on the protrusion 51, and correspondingly the clamping buckle is disposed on each mechanical part. The structural layer 50 is fastened to the position-limiting component 60 by using the clamping buckle and the clamping slot.

When the position-limiting component 60 is correspondingly connected to the housing, a sliding connection manner may be used. In addition, during the sliding connection, movement in a first direction needs to be limited, to ensure a spacing between the housing and the flexible screen 12. During specific implementation of the sliding connection, a sliding slot 70 is disposed on the housing, and the position-limiting component 60 is located in the sliding slot 70 and can slide in the sliding slot 70. A group of sliding slots 70 is disposed on each housing. In addition, a quantity of sliding slots 70 in each group of sliding slots 70 is the same as a quantity of position-limiting components in each corresponding group of position-limiting components 60, and each sliding slot 70 is in a one-to-one correspondence with each position-limiting component 60. When each group of sliding slots 70 is specifically disposed, FIG. 7 and FIG. 8 are compared. FIG. 7 shows a position of the position-limiting component 60 in a corresponding sliding slot 70 when the mobile terminal is unfolded. FIG. 8 shows a position of the position-limiting component 60 in the corresponding sliding slot 70 when the mobile terminal is folded. When the mobile terminal is folded, the flexible screen 12 is bent, and when the flexible screen 12 is bent, the entire flexible screen component 10 arches. However, a position near a bending position arches relatively seriously. To reduce the arching, layer structures on a side, of the flexible screen 12, close to the housing needs to be misaligned. Therefore, sliding relative to the housing is generated. A sliding direction of the sliding relative to the housing is perpendicular to an axis along which the housing and the rotating shaft are connected, and the sliding direction is shown by an arrow in FIG. 7. Therefore, when the sliding slot 70 is disposed, a length direction of the sliding slot 70 is perpendicular to an axis direction along which the two housings are rotatably connected. When the mobile terminal is unfolded, the layer structure of the flexible screen 12 drives the position-limiting component 60 to be close to a side, of the housing, connected to the bending structure 40. As shown in FIG. 8, when the mobile terminal is folded, misalignment occurs between layer structures in the flexible screen 12, and a misalignment distance is LI, so that the layer structures in the flexible screen 12 drive the position-limiting component 60 to move a distance of approximately L1 toward a side that is away from a side on which the housing and the bending structure 40 are connected.

When the position-limiting component 60 is assembled in the sliding slot 70, the two groups of position-limiting components 60 are respectively located in the two groups of sliding slots 70 in a one-to-one correspondence, and can slide in the sliding slot 70. During sliding, movement of the position-limiting component 60 in the first direction is limited. In other words, displacement of the position-limiting component 60 in a direction in which the housing points to the flexible screen component 10 is limited. In specific implementation, different structures may be used for implementation. For example, the position-limiting component 60 is a T-shaped position-limiting component 60, and a vertical part 61 of the position-limiting component 60 is fastened to the flexible screen component 10 after passing through a corresponding sliding slot 70. A horizontal part 62 of the position-limiting component 60 is clamped on a surface, of the sliding slot 70, away from the flexible screen component 10, to limit movement of the vertical part 61 toward the flexible screen component 10. As shown in FIG. 5 and FIG. 6, when the structure form is used, the horizontal part 62 of the position-limiting component 60 is exposed on a surface, of the housing, away from the flexible screen 12. A length direction of the horizontal part 62 of the position-limiting component 60 and the length direction of the sliding slot 70 may be a specified angle, such as 30°, 60°, 90° and other different degrees. In a specific embodiment, the horizontal 62 is perpendicular to the length direction of the sliding slot 70. In this way, a protruding part of the horizontal part 62 relative to the vertical part 61 may be disposed on two side walls of the sliding slot 70, so that a spacing between the flexible screen component 10 and the housing is limited by using a length of the position-limiting component 60. When the flexible screen 12 is bent, when the flexible screen 12 tends to be arched, a limitation is imposed between the horizontal part 62 and the side wall of the sliding slot 70, to prevent the flexible screen 12 from changing a spacing between the flexible screen 12 and the housing, and reduce the arching of the flexible screen 12.

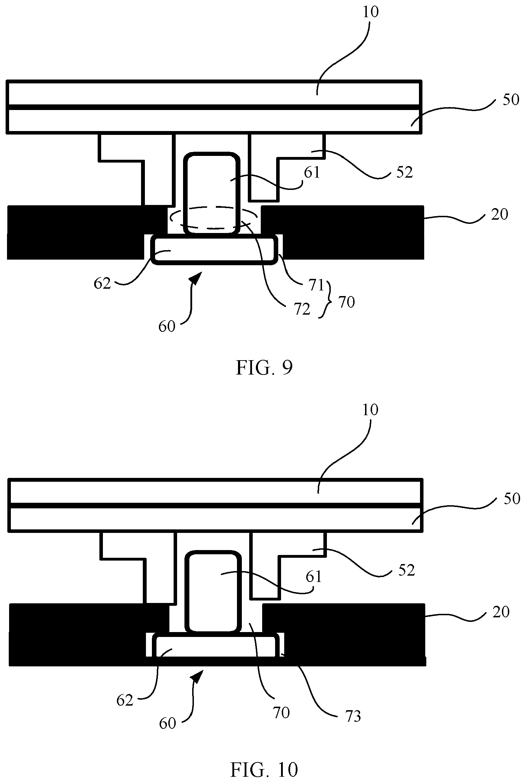

Certainly, the foregoing cooperation manner between the position-limiting component 60 and the sliding slot 70 is not limited to the foregoing case, and another cooperation manner may be used to implement that when the position-limiting component 60 cooperates with the sliding slot 70, sliding may be implemented, and displacement in the first direction may also be limited. As shown in FIG. 9, the sliding slot 70 uses an inverted T-shaped slot. Each position-limiting component 60 is an inverted T-shaped position-limiting component 60. In addition, the horizontal part 62 of the position-limiting component 60 is located in a horizontal part 72 of the corresponding sliding slot 70 and can slide, and the vertical part 61 of each position-limiting component 60 is located in a vertical part 71 of the corresponding sliding slot 70 and can slide. The vertical part 61 of the position-limiting component 60 cooperates with the vertical part 71 of the sliding slot 70, and the horizontal part 72 of the sliding slot 70 cooperates with the horizontal part 62 of the position-limiting component 60, to ensure that the position-limiting component 60 can slide in the sliding slot 70. In addition, the horizontal part 72 of the sliding slot 70 may further be used to limit the horizontal part 62 of the position-limiting component 60, to ensure that the position-limiting component 60 does not generate a displacement in the first direction. During assembly, as shown in FIG. 9, because the sliding slot 70 uses a through slot, the position-limiting component 60 may be inserted into a surface, of the housing, away from the flexible screen component 10, and is in a threaded connection with the threaded sleeve 52.

In another alternative solution, as shown in FIG. 10, two opposite side walls of the sliding slot 70 are provided with a position-limiting slot 73. The position-limiting component 60 is an inverted T-shaped position-limiting component 60. The vertical part 61 of the position-limiting component 60 is slidingly assembled into the corresponding sliding slot 70, and the horizontal part 62 of the position-limiting component 60 is slidingly assembled into the position-limiting slot 73 on the corresponding sliding slot 70. The sliding slot 70 may be understood as a deformation in FIG. 9. In FIG. 9, the sliding slot 70 is a through slot, and in FIG. 10, the sliding slot 70 does not penetrate the housing. During assembly in the sliding slot 70 shown in FIG. 10, a mounting hole (not shown in the figure) connected to the sliding slot 70 may be disposed on a surface, of the housing, away from the flexible screen component 10, and the position-limiting component 60 is placed into the sliding slot 70 by using the mounting hole. In addition, the horizontal part 62 of the position-limiting component 60 is inserted into the corresponding position-limiting slot 73, and the position-limiting component 60 is rotated to implement a threaded connection with the threaded sleeve 52.

Certainly, it should be understood that the foregoing manners of the sliding connection between the housing and the sliding slot 70 are merely a plurality of specific implementation structures. In the structure provided in this embodiment of this application, another structure that can implement sliding and that can limit movement in a specified direction may be used to implement the sliding connection between the position-limiting component 60 and the housing.

For the specific structure of the position-limiting component 60 provided in the foregoing embodiment, a bolt or a screw may be used. In this case, a screw rod of the bolt or the screw is the vertical part 61, and a screw cap of the bolt and the screw is the horizontal part 62. During use, the screw rod may be fastened to the structural layer 50, and the sliding is implemented and displacement of the screw rod in the first direction is limited by cooperation between the screw cap and the sliding slot 70.

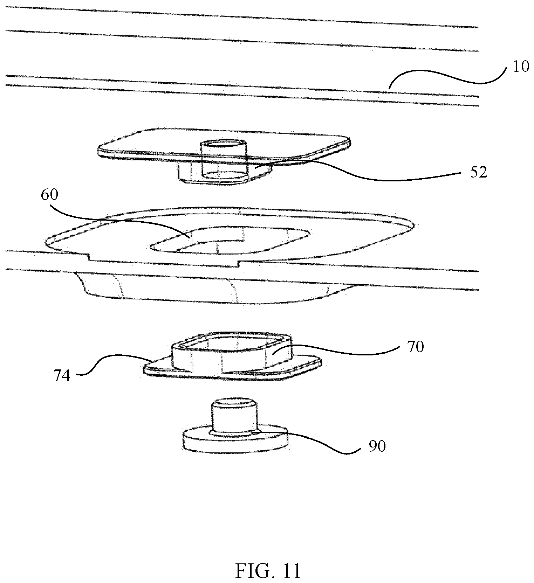

Certainly, in addition to the foregoing structure, another mechanical part may be used as the position-limiting component 60. As shown in FIG. 11, in the structure shown in FIG. 11, a position-limiting component 70 includes a cylindrical structure, and a surface, of the cylindrical structure, away from the flexible screen component 10 has a convex shoulder 74. The convex shoulder 74 may be clamped outside a slot wall of the sliding slot 60, and when the cylindrical structure is connected to the threaded sleeve 52, the cylindrical structure is connected by using a screw 90. As shown in an exploded diagram shown in FIG. 11, first, the cylindrical structure passes through the sliding slot 60 and is sleeved on the threaded sleeve 52, and then, the screw 90 passes through the cylindrical structure and is in the threaded connection with the threaded sleeve 52.

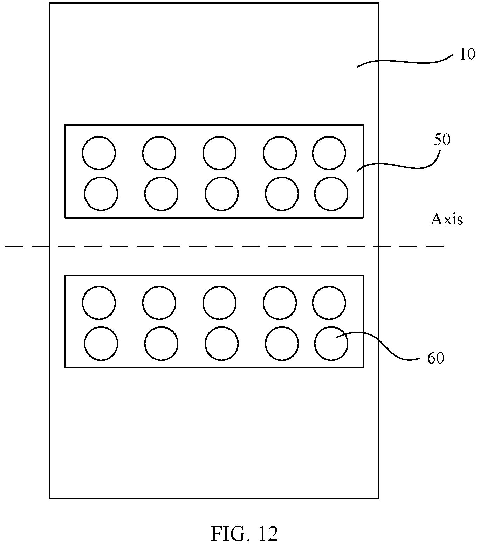

It can be learned from the foregoing description that the disposed position-limiting component 60 reduces the arching of the flexible screen component 10 when the flexible screen component 10 is bent. When the flexible screen component 10 arches, a position near a bending position arches relatively seriously. Therefore, when each group of position-limiting components 60 is disposed, different quantities may be used. For example, one or more (two or more) are used to reduce the arching of the flexible screen component 10. When one position-limiting component is used, the position-limiting component 60 may be disposed at a position close to a middle of the flexible screen component 10. When the plurality of position-limiting components 60 are used, as shown in FIG. 12, an array manner or a single row arrangement manner may be used. However, regardless of which manner is used, an arrangement direction of at least one row of the plurality of position-limiting components 60 is parallel to an axis direction along which the housings are rotatably connected, to reduce the arching of the flexible screen component 10.

In addition, for the structural layer 50 provided in this embodiment of this application, the structural layer 50 enhances strength of a connection between the position-limiting component 60 and the flexible screen component 10, and can reduce the arching of the flexible screen component 10. Because rigidity of the structural layer 50 is greater than the strength of the flexible screen component 10, when the structural layer 50 is added, an effect of the position-limiting component 60 when the flexible screen component 10 arches can be improved by increasing an area of the structural layer 50. For a shape of the structural layer 50, different shapes may be used. For example, different shapes such as a rectangle, an ellipse, or a circle are used. The structural layer 50 shown in FIG. 12 is the rectangular, and a length direction of the structural layer 50 is parallel to an axis direction along which the housings are rotatably connected to. Therefore, the structural layer 50 is disposed in a position at which arching is most likely to occur, to improve an effect when the flexible screen component 10 arches.

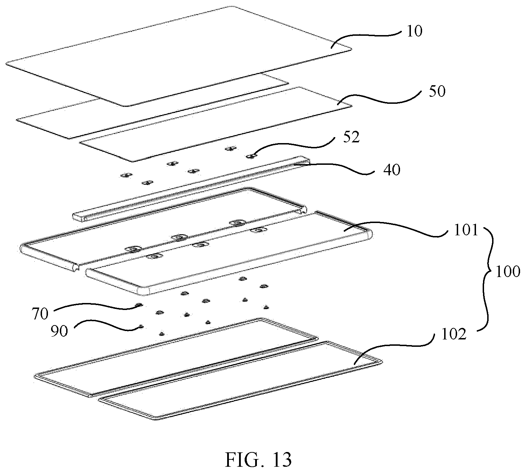

As shown in FIG. 13, an embodiment of this application provides another mobile terminal. The mobile terminal includes two housings 100 that are rotatably connected and a flexible screen component 10 fastened to the two housings 100. The housing 100 is used as a support structure of the flexible screen component. The housing 100 may specifically include a middle frame and a side frame connected to the middle frame. The middle frame may be fastened to the side frame, or the middle frame and the side frame may be of an integrated structure. For example, the middle frame and the side frame are of an integrally formed structure. FIG. 13 shows that the middle frame and the side frame use an integrated support structure 101. Certainly, the housing may further include a rear housing 102, and the rear housing 102 may be fastened to the side frame. Certainly, the rear housing and the side frame may alternatively of an integrated structure. For example, the rear housing and the side frame are of an integrally formed structure.

When the two housings 100 are connected, the two housings 100 are rotatably connected by using the bending structure 40, to implement folding of the mobile terminal. The bending structure 40 may be a bending structure developed based on a design of a folding terminal, or may be another bending structure. This is not limited in this embodiment of the present invention. In addition, when the two housings 100 are rotatably connected, a rotating shaft or another component may be used to implement the rotation connection. The rotating shaft may be a new rotating shaft structure developed based on the folding terminal, or may be another rotating shaft structure. This is not limited in this embodiment of the present invention.

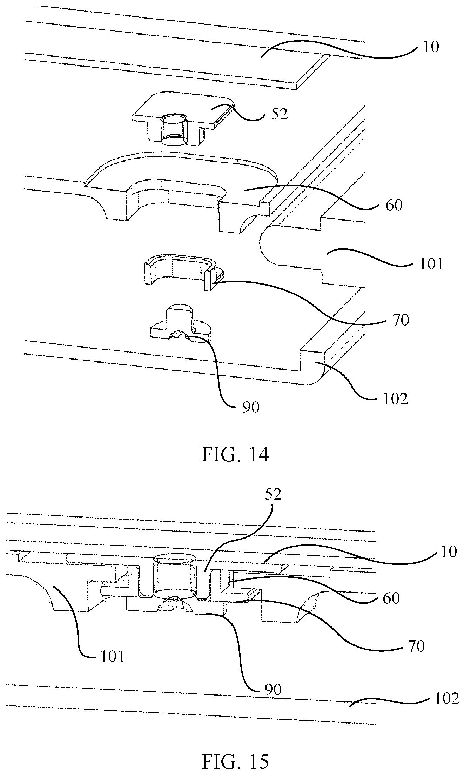

In addition, the mobile terminal further includes a position-limiting component 70 fastened to the flexible screen component 10. As shown in FIG. 14, in a structure shown in FIG. 14, the position-limiting component 70 includes a cylindrical structure and a threaded sleeve 52. During specific connection, a structural layer 50 may be disposed on a side, of the flexible screen component 10, facing the housing 100, and the threaded sleeve 52 may be disposed at the structural layer 50. For details, refer to the description of the structural layer of the mobile terminal shown in FIG. 1. Details are not described herein again.

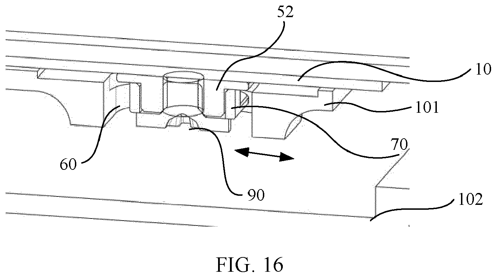

To understand a cooperation relationship between the the threaded sleeve 52 and the housing 100, refer to the schematic structural diagrams shown in FIG. 15 and FIG. 16. FIG. 15 and FIG. 16 are schematic diagrams of cooperation between the position-limiting component 70 and the housing 100 in two vertical directions. FIG. 16 is a schematic diagram of the position-limiting component 70 in a sliding direction. For details, refer to a direction indicated by an arrow in FIG. 16. First, referring to FIG. 15, the threaded sleeve 52 is fastened to the display screen component 10, the cylindrical structure has a convex shoulder 74, and the convex shoulder 74 is located on a surface, of the cylindrical structure, away from the flexible screen component 10. During assembly, a sliding slot 60 is disposed on the housing 100, the cylindrical structure passes through the sliding slot 60 and is sleeved on the threaded sleeve 52, and the convex shoulder 74 may be clamped outside the side wall of the sliding slot 60. When the cylindrical structure is connected to the threaded sleeve 52, the cylindrical structure is connected by using the screw 90. During use, the disposed position-limiting component 60 reduces the arching of the flexible screen component 10 when the flexible screen component 10 is bent, to improve use of the mobile terminal.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A mobile terminal, comprising: two housings that are rotatably connected, and a flexible screen component fastened to the two housings, wherein
the flexible screen component is fastened to two groups of position-limiting components, one group of sliding slots is disposed on each housing, the two groups of position-limiting components are respectively located in two groups of sliding slots in a one-to-one correspondence, and the two groups of position-limiting components are configured to limit a relative vertical distance between the flexible screen component and the housings.

2. The mobile terminal according to claim 1, wherein that the flexible screen component is fastened to two groups of position-limiting components comprises: two structural layers are disposed on a surface, of the flexible screen component, facing the two housings, and the two groups of position-limiting components are fastened to a surface, of the two structural layers, away from the flexible screen component in a one-to-one correspondence.

3. The mobile terminal according to claim 2, wherein that the flexible screen component is fastened to two groups of position-limiting components comprises: a protrusion is disposed on a surface, of at least one of the two structural layers, away from the flexible screen component, and each group of position-limiting components is in a threaded connection with a corresponding protrusion.

4. The mobile terminal according to claim 2, wherein that the flexible screen component is fastened to two groups of position-limiting components comprises: at least one of the two structural layers is fastened to a threaded sleeve on a surface away from the flexible screen component, and each group of position-limiting components is in a threaded connection with a corresponding threaded sleeve.

5. The mobile terminal according to claim 4, wherein the threaded sleeve is welded to or bonded to a corresponding structural layer.

6. The mobile terminal according to any one of claims 1 to 5, wherein that the two groups of position-limiting components are configured to limit a relative vertical distance between the flexible screen component and the housings comprises: each group of position-limiting components comprises at least one position-limiting component, and each position-limiting component is a T-shaped position-limiting component, a vertical part of each position-limiting component is located in a corresponding sliding slot and can slide relative to the sliding slot, and a horizontal part of each position-limiting component is clamped on a surface, of the sliding slot, away from the flexible screen component, to limit a movement of the vertical part toward the flexible screen component.

7. The mobile terminal according to any one of claims 1 to 5, wherein that the two groups of position-limiting components are configured to limit a relative vertical distance between the flexible screen component and the housing comprises: a sliding slot in each group of sliding slots is an inverted T-shaped sliding slot, each group of position-limiting components comprises at least one position-limiting component, and each position-limiting component is an inverted T-shaped position-limiting component, wherein
a horizontal part of each position-limiting component is located in a horizontal part of a corresponding sliding slot and can slide, and a vertical part of each position-limiting component is located in a vertical part of the corresponding sliding slot and can slide.

8. The mobile terminal according to any one of claims 1 to 5, wherein that the two groups of position-limiting components are configured to limit a relative vertical distance between the flexible screen component and the housings comprises: two opposite side walls of a sliding slot in each group of sliding slots are provided with a position-limiting slot, each group of position-limiting components comprises at least one position-limiting component, and each position-limiting component is an inverted T-shaped position-limiting component, wherein
a vertical part of each position-limiting component is located in a corresponding sliding slot and can slide, and a horizontal part of the position-limiting component is located in the position-limiting slot on the corresponding sliding slot and can slide.

9. The mobile terminal according to any one of claims 1 to 8, wherein the flexible screen component comprises a cover and a flexible screen connected to the cover, and the cover is separately bonded to the two housings.

10. A mobile terminal, comprising: two housings that are rotatably connected, a flexible screen component fastened to the two housings, and a position-limiting component fastened to the flexible screen component, wherein
the position-limiting component comprises a cylindrical mechanical part and a threaded sleeve, the cylindrical mechanical part comprises a convex shoulder, and the threaded sleeve is fastened to the flexible screen component;
a sliding slot is disposed on the housing, and the cylindrical mechanical part passes through the sliding slot and is sleeved on the threaded sleeve;
the cylindrical mechanical part is fastened to the threaded sleeve; and
the cylindrical mechanical part slides in the sliding slot.
